## Europäisches Patentamt
## European Patent Office
## Office européen des brevets

(11) Publication number: **0 013 601**
**B1**

(12) **EUROPEAN PATENT SPECIFICATION**

(45) Date of publication of patent specification: **26.01.83**

(51) Int. Cl.³: **F 16 K 5/10**

(21) Application number: **80300029.8**

(22) Date of filing: **04.01.80**

(54) Variable flow control valve.

(30) Priority: **10.01.79 FI 790084**

(43) Date of publication of application:
**23.07.80 Bulletin 80/15**

(45) Publication of the grant of the patent:
**26.01.83 Bulletin 83/4**

(84) Designated Contracting States:
**AT CH DE FR GB IT NL SE**

(56) References cited:
**BE - A - 806 674**
**FR - A - 1 498 325**

(73) Proprietor: **BEY, ROGER**
**19, Rue des Rossignols**
**F-68110 Illzach (FR)**

(72) Inventor: **BEY, ROGER**
**19, Rue des Rossignols**
**F-68110 Illzach (FR)**

(74) Representative: **Kerr, Simonne June et al,**
**European Patent Attorney POTTS, KERR & CO.**
**13 High Street**
**Windsor Berkshire SL4 1LD (GB)**

Courier Press, Leamington Spa, England.

# Variable flow control valve

The present invention concerns a valve in which the valve body is provided with a flow passage in which is rotatably mounted a closure member which is provided with a stem attached by bearings in a position perpendicular to the longitudinal direction of the flow passage and passing through the wall of the valve body to the outside, the bearings having a gland and seal, a device being fitted to control the flow of medium passing through the valve.

In known flow passages, such as pipes not only valves but also other flow control devices are placed to distribute the pressure drop into several phases. It is also known (e.g. from BE - A - 806 674), that the closure member is furnished with an additional punched plate-like flow control device which is located transversely with respect to the longitudinal axis of the flow passage of the closure member. These flow control devices have the disadvantage that when the valve is fully open they restrict the flow capacity. On the other hand, if there is little or no flow control cavitation is produced in the valve, with resulting vibration, noise and wear, at high pressure ranges and especially with respect to compressible media.

In afore-mentioned BE - A - 806 674 there is disclosed a valve having a valve body provided with a flow port into which is rotatably fitted a closure member with a seating fitted around the closure member, the closure member having a stem which is attached by means of bearings is a position perpendicular to the longitudinal direction of the flow port and passing through the wall of the valve body to the outside, a device being fitted to control the flow of medium passing through the valve restricting in both flow directions, consists of at least one baffle plate having apertures therethrough.

An object of the present invention is to produce an improved valve provided with a flow control device which, when the valve is in the fully open position, restricts the flow very little, this is to say, the functioning of the valve remains similar to that of a nonrestricting valve of corresponding size but in which the restriction of flow is intense in the control range of the valve in which the pressure drop is great and restriction is most required.

The valve in accordance with the invention is characterized in that at least one baffle is secured to the bore of the closure member, in that the ends of the baffle plate protrude to or near the surface level of rotation of the closure member and in that the internal surface of the valve body, in respect of the portion between the seats, is designed to correspond to the shape of the external surface of rotation of the closure member with a small clearance.

The invention will be described further by way of example, with reference to the accompanying drawings, in which:—

Fig. 1 is a longitudinal section across the stem and flow passage of a ball valve in accordance with the present invention;

Fig. 2 is a longitudinal section of the valve at the centre of the flow passage viewed from the direction of the stem whilst the closure member is almost in a fully closed position;

Fig. 3 is a view of the valve shown in Fig. 2 with the closure member in the open position;

Fig. 4 is an alternative embodiment of the valve construction in which a flow control device consists of several parallel baffle plates;

Fig. 5 is an embodiment of the valve in which the cross-section area of the flow port of the closing member is designed to be smaller at the up-stream side than at the down-stream side;

Fig. 6 is a side view of a closure member, seen in the direction of the flow port and provided with an alternative type of flow control device;

Fig. 7 is a section on the line VI—VI of Fig. 6;

Fig. 8 is a side view of a closure member, seen in the direction of the flow port and provided with an alternative type of flow control device;

Fig. 9 is a section on the line VIII—VIII of Fig. 8;

Fig. 10 is a side view of a closure member, seen in the direction of the flow port and provided with another type of flow control device;

Fig. 11 is a section on the line X—X of Fig. 10;

Fig. 12 is a sectional side view of a closure member taken in a direction perpendicular to the flow port, while the closure member is provided with yet another type of flow control device; and

Figs. 13 and 14 show, in section, two alternative views of closure member.

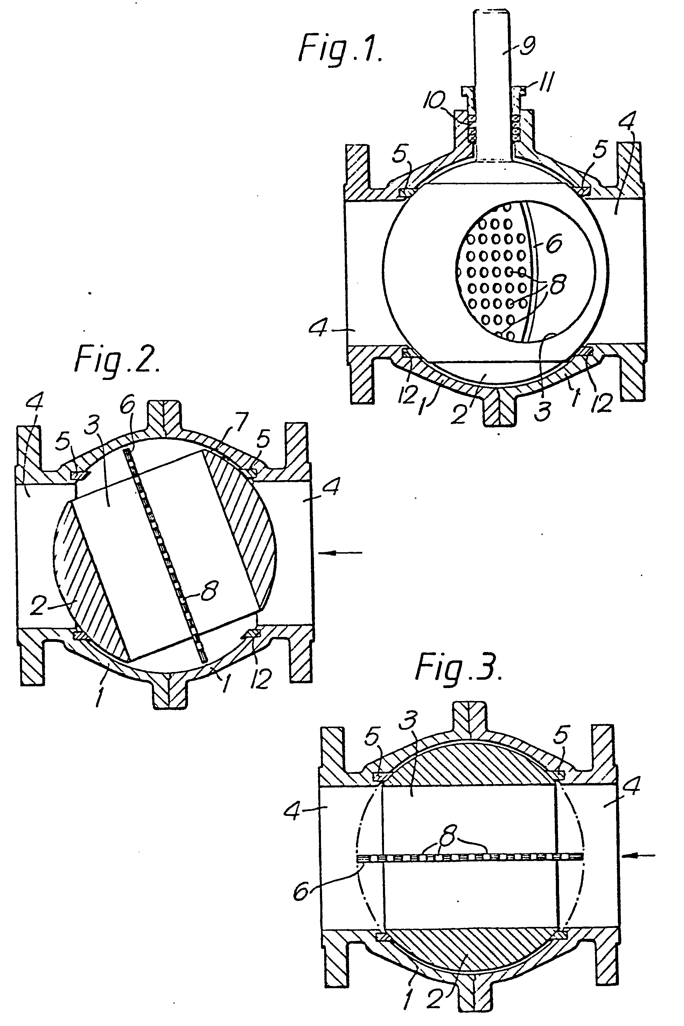

The valve shown in Figs. 1 to 3 comprises a ball-like closure member 2 placed inside a valve body 1 and through which passes a bore or passage 3 the diameter of which equals the diameter of a circular cross-section medium flow port 4 placed in the valve body 1 at both sides of the closure member 2. In Figs. 1 and 2 the valve is shown in the closed position, the bore or passage 3 being almost transverse to the flow port 4. The closure member 2 has an integral stem 9. An inlet seal construction for the stem 9, is connected to the valve body 1, which seal consists of a packing 10 and a gland 11. When the gland 11 is pressed into the body part of the seal structure by means such as bolts the packing 10, placed around the stem 9, is pressed against the stem 9 and the body part.

Annular recesses 12 are made in the body 1 on both sides of the closure member 2 transverse to the flow port 4, seat rings 5 being fitted in these recesses.

A baffle plate 6 is firmly attached to the bore or passage 3 of the closure member 2, the ends of the plate protruding into or very close to the level of the surface of the rotation pattern of the closure member 2. The internal surface of a portion 7 of the valve body 1 between the seats 5, is designed to correspond to the shape of the external surface of the rotation pattern of the closure member 2 with a small clearance. Holes or apertures 8 pass through the baffle plate 6 being distributed over the entire surface area. The baffle plate 6 is parallel to the bore or passage 3 in the closure member 2, being placed centrally in the bore or passage 3 at the stem shaft 9. However it need not be located as shown in Figs. 1 to 3, but may be mounted in several different ways.

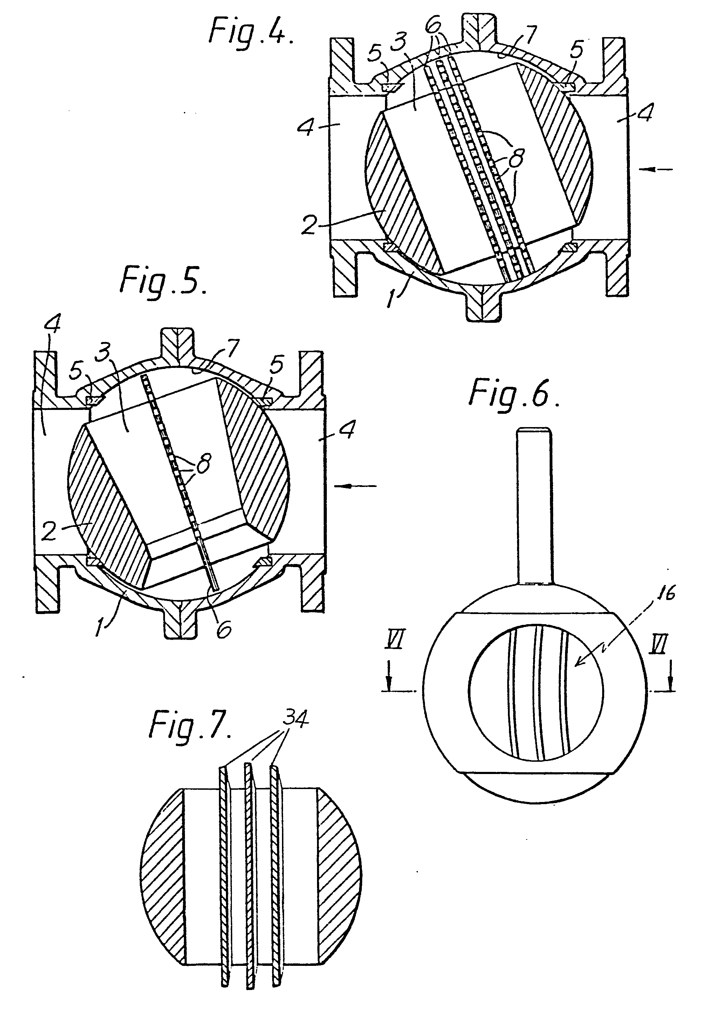

Fig. 4 shows a valve in which the flow control device consists of three spaced apart parallel juxtaposed baffle plates 6. In this embodiment it is advantageous that the holes or apertures 8 adjacent two baffle plates 6 are in different positions, i.e. not face to face. When necessary, for example in controlling compressible mediums, the holes or apertures 8 are made so that the aperture area of the first baffle plate in the flow direction is smallest, in relation to the total area of the plate, the aperture area increasing in the flow direction for one baffle plate to the next which means that the size of holes or apertures 8 increases from plate to plate in the flow direction.

In high-pressure valves designed for compressible mediums it is especially advantageous, to design the bore passage 3 in the closure member 2 in the way shown in Fig. 5 so that the cross-sectional area thereof is smaller or narrower at the up-stream side than it is at the down-stream side. It is then advantageous to start punching the baffle plate or plates 6 at the up-stream of the flow only at the smallest surface area of the cross-section of the bore or passage 3 and to punch the plate or plates towards down-stream.

When the valve is opened from the closed position by turning the closure member 2 by means of the stem 9, the baffle plate 6 covers the flow passage well and almost the entire quantity of medium going through the valve passes through the holes or apertures 8 in the baffle plate 6; only a small proportion passes through the narrow slit between the ends of the baffle plate 6 and the wall 7 of the valve body 1. The more the valve is opened, the smaller is the choking effect of the baffle plate 6, for then the proportion of the total flow medium flowing past the baffle plate 6 increases. When the valve is in open position, the baffle plate 6 no longer chokes as it is situated in the direction of the flow thereby allowing the valve to function almost with full capacity. Whilst in the open position, the or each baffle plate 6 is efficiently cleaned by the effect of the flow of medium in respect of possible foreign particles and impurities.

Although the structure described above is applied to a ball valve, it can of course be equally well applied to plug valves. The baffle plate does not have to be plane but may be incurved or cylindrical in shape.

In the embodiment shown in Figs. 6 and 7 the flow control device 16 comprises a plurality of perforated structures 34 that are in the form of curved cylinder portions.

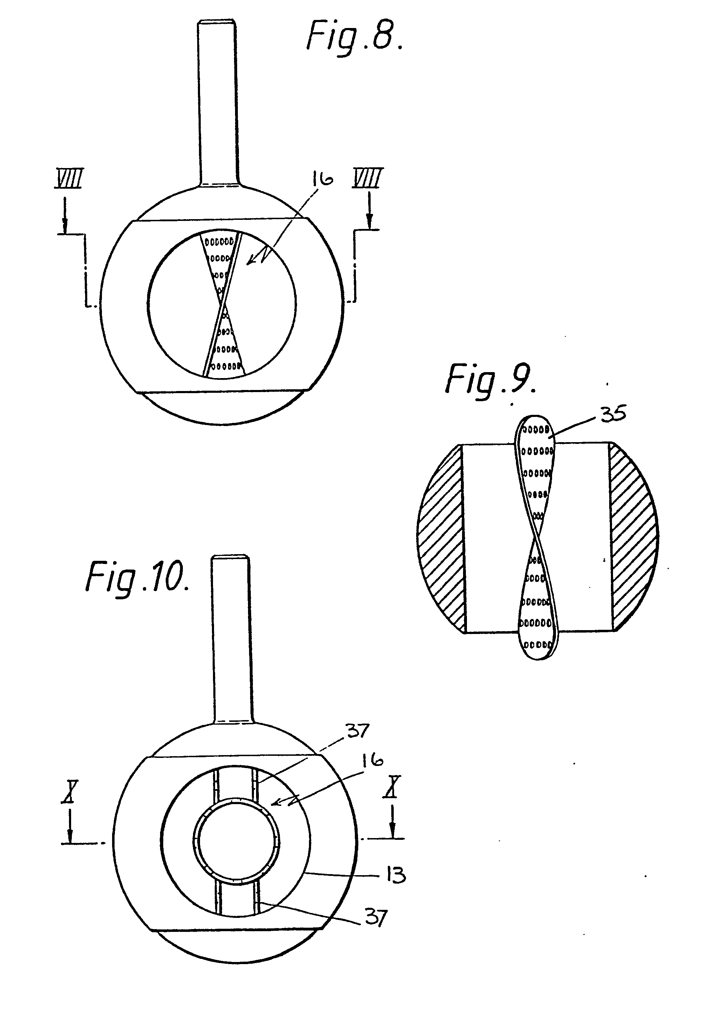

In the Figs. 8 and 9 embodiment, the flow control device 16 comprises a structure 35 essentially consisting of a perforated plate twisted into a spiral configuration.

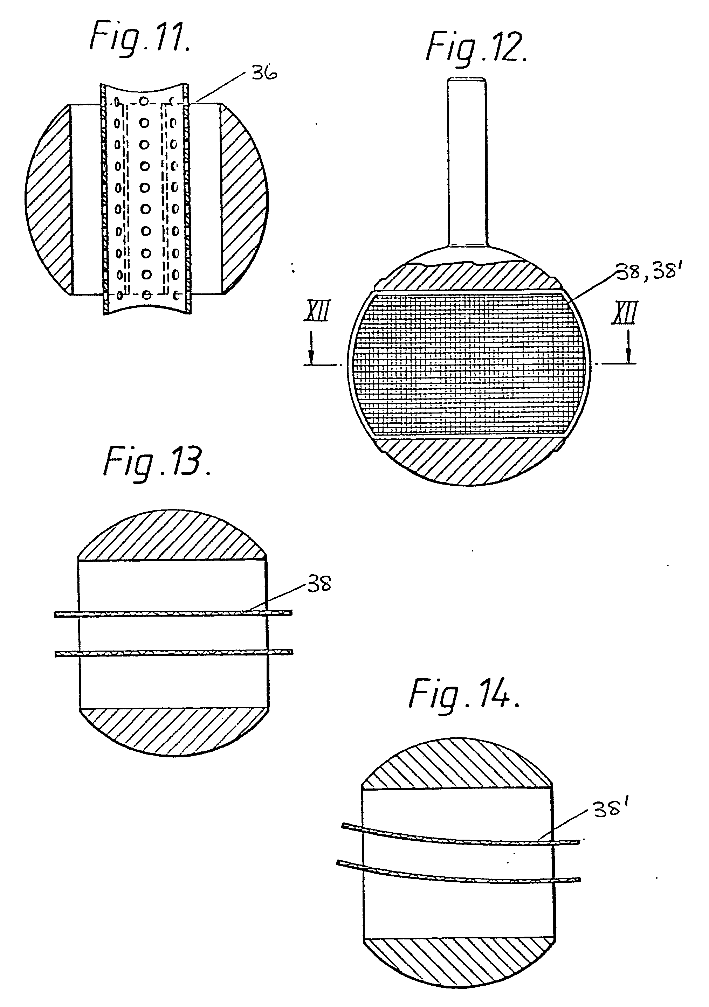

The flow control device 16 shown in Figs. 10 and 11 comprises a tubular structure 36 concentric with and substantially smaller than the bore 13, and preferably supported at the top and bottom thereof by one or more perforated plates 37. Both the tube 36 and the plates 37 are substantially parallel to the longitudinal axis of the bore 13.

The exact nature of the perforations or apertures formed in the flow control device 16 may take a wide variety of forms. In the embodiments shown in Figs. 12, 13 and 14 it comprises one or more screens 38, 38'. The screens 38 are planar, whilst the screens 38' are curved in the direction of flow. The screens 38, 38' may comprise rods or wires resembling a net.

## Claims

1. A valve having a body (1) provided with a flow port (4) into which is rotatably fitted a closure member (2) with seat (5) fitted on both sides of the closure member (2) between it and the valve body (1), the closure member (2) having a bore (3) and a stem (9) which is attached by means of bearings in a position perpendicular to the longitudinal direction of the flow port (4) and passing through the wall of the valve body (1) to the outside, the bearings having a gland (11) and a seal (10), a device being fitted to control the flow of medium passing through the valve and consisting of at least one baffle plate (6) having apertures (8) there through characterized in that said baffle plate (6) is secured to the bore (3) of the closure member (2), in that the ends of said baffle plate (6) protrude to or near the surface level of rotation of the closure member (2) and in that the internal surface of the valve body (1), in respect of the portion (7) between the seat (5), is designed to correspond to the shape of the external surface of rotation of the closure member (2) with a small clearance.

2. A valve according to Claim 1, characterized in that each baffle plate (6) is parallel to the bore (3) of the closure member (2) and parallel to the stem (9).

3. A valve according to Claim 1, characterized in that the appertures (8) in the baffle plate (6) are evenly distributed over the entire plate area.

4. A valve according to Claim 2, characterized in that a plurality of spaced apart parallel baffle plates (6) each comprise apertures (8) which are located in differing positions.

5. A valve according to Claim 4, characterized in that the baffle plate (6) or group of plates (6) is located centrally in the bore (3) of the closure member (2) at the stem (9).

6. A valve according to Claim 5, characterized in that the area of the apertures (8) of the first baffle plate (6) in the flow direction, in relation to the total area of the baffle plate (6) is smallest, the area of the apertures increasing from one plate to the next in the flow direction.

7. A valve according to Claim 1, characterized in that there is a small clearance between the internal surface of the portion (7) between the seat (5) in the valve body (1) and the ends of the baffle plate (6).

8. A valve according to Claim 1, characterized in that the border area of the baffle (6) that is placed outside the bore or passage (3) in the closure member (2) has no holes or apertures at the up-stream side of the flow.

9. A valve according to any preceding claim, characterized in that each baffle plate (6) is plane.

10. A valve according to any of Claims 1 to 8, characterized in that each baffle plate (6) is arcuate in shape in the flow direction.

11. A valve according to any of Claims 1 to 8, characterized in that each baffle plate (34) is twisted into spiral form.

12. A valve according to any of Claims 1 to 10, characterized in that each baffle plate (38, 38') consists of a screen of rods or wires resembling a net.

## Revendications

1. Vanne présentant un corps (1) muni d'un orifice d'écoulement (4) à l'intérieur duquel est monté en rotation un élément de fermeture (2), des sièges (5) étant prévus des deux côtés de l'élément de fermeture (2) entre ce dernier et le corps (1), l'élément de fermeture (2) présentant un alésage (3) et une tige (9) qui est fixée, par l'intermédiaire de portées, dans une position perpendiculaire à la direction longitudinale de l'orifice d'écoulement (4) et traversant la paroi du corps (1) vers l'extérieur, lesdites portées présentant un chapeau (11) et un joint d'étanchéité (10), un dispositif étant adapté pour régler le débit du fluide s'écoulant à travers la vanne et comprenant au moins une plaque déflectrice (6) munie de perforations (8), caractérisée en ce que ladite plaque déflectrice (6) est fixée à l'alésage (3) de l'élément de fermeture (2), les extrémités de la plaque déflectrice (6) étant en saille sur le niveau de la surface de rotation de l'élément de fermeture ou au voisinage de ce niveau, et en ce que la surface intérieure du corps (1), pour ce qui est de la portion (7) située entre les sièges (5), est réalisée de manière à correspondre, avec un faible jeu, à la forme de la surface extérieure de rotation de l'élément de fermeture (2).

2. Vanne selon la revendication 1, caractérisé en ce que chaque plaque déflectrice (6) est parallèle à l'alésage (3) de l'élément de fermeture (2) et parallèle à la tige (9).

3. Vanne selon la revendication 1, caractérisée en ce que les perforations (8) de la plaque déflectrice (6) sont uniformément réparties sur la totalité de l'aire de cette plaque.

4. Vanne selon la revendication 2, caractérisée en ce qu'il est prévu une pluralité de plaques déflectrices (6) parallèles et à distance entre elles, chacune de ces plaques comprenant des perforations (8) qui sont disposées en des positions différentes.

5. Vanne selon la revendication 4, caractérisée en ce que la plaque déflectrice (6) ou le groupe de plaques (6) est disposé au centre, dans l'alésage (3) de l'élément de fermeture (2), et dans l'axe de la tige (9).

6. Vanne selon la revendication 5, caractérisée en ce que l'aire des perforations (8) de la première plaque déflectrice (6) est la plus petite, dans le sens de l'écoulement, comparativement à l'aire totale de la plaque déflectrice (6), l'aire des perforations augmentant d'une plaque à la suivante, dans le sens de l'écoulement.

7. Vanne selon la revendication 1, caractérisée en ce qu'il est prévu un faible jeu entre la surface intérieure de la portion (7) se trouvant entre les sièges (5) dans le corps (1) de la vanne, et les extrémités de la plaque déflectrice (6).

8. Vanne selon la revendication 1, caractérisée en ce que l'aire se trouvant en bordure de la plaque déflectrice (6) qui est placée à l'extérieur de l'alésage ou passage (3) dans l'élément de fermeture (2), ne présente pas de perforations ou ouvertures du côté amont de l'écoulement.

9. Vanne selon l'une des revendications précédentes, caractérisée en ce que chaque plaque déflectrice (6) est plane.

10. Vanne selon l'une des revendications 1 à 8, caractérisée en ce que chaque plaque déflectice (6) présente une forme incurvée dans le sens de l'écoulement.

11. Vanne selon l'une des revendications 1 à 8, caractérisée en ce que chaque plaque déflectrice (34) est torsadée en forme d'hélice.

12. Vanne selon l'une des revendications 1 à 10, caractérisée en ce que chaque plaque déflectrice (38, 38') est formée par un écran présentant des tiges ou des fils lui conférant l'aspect d'un filet.

## Patentansprüche

1. Ventil, bei welchem der Ventilkörper mit einer Durchflußöffnung versehen ist, die drehbar auf einem Verschlußkörper befestigt ist, mit Sitzringen, die beiderseits des Verschlußkörpers zwischen denselben und dem Ventilkörper angeordnet sind, wobei der Verschlußkörper eine Bohrung und einen Schaft aufweist, der mittels eines Lagers im rechten Winkel zur Längsrichtung der Durchflußöffnung angeordnet ist und aus der Wand des Ventilkörpers herausragt, wobei das Lager aus einer Stopfbüchse und einer Dichtung besteht, sowie mit einer Einrichtung zur Regelung des Durchflusses eines Mediums, welches das Ventil durchfließt, welche zumindest aus einer Trennplatte mit Durchgangsöffnungen besteht, dadurch gekennzeichnet, daß die Trennplatte (6) in der Bohrung (3) des Verschlußkörpers (2) in der Weise eingesetzt ist, daß die Enden der Trennplatte (6) über oder nahe der Oberfläche der Drehfläche des Verschlußkörpers (2) vorspringen, und daß die Innenseite des Ventilkörpers (1) im Bereich (7) zwischen den Sitzringen (5) ausgebildet ist, um mit der Form der Außenfläche der Drehfläche des Verschlußkörpers (2) bis auf einen schmalen Spalt übereinzustimmen.

2. Ventil nach Anspruch 1, dadurch gekennzeichnet, daß jede Trennplatte (6) parallel zur Bohrung (3) des Verschlußkörpers (2), und parallel zum Schaft (9) ausgerichtet ist.

3. Ventil nach Anspruch 1, dadurch gekennzeichnet, daß die Durchgangsöffnung (8) in der Trennplatte (6) gleichmäßig über die gesamte Plattenfläche verteilt sind.

4. Ventil nach Anspruch 2, dadurch gekennzeichnet, daß eine Mehrzahl von im Abstand zueinander parallel angeordneten Trennplatten (6) jeweils Durchgangsöffnungen in verschiedenen Positionen aufweisen.

5. Ventil nach Anspruch 4, dadurch gekennzeichnet, dass die Trennplatte (6) oder eine Gruppe von Trennplatten mittig in der Bohrung (3) des Verschlusskörpers (2) beim Schaft (9) angeordnet ist, bzw. sind.

6. Ventil nach Anspruch 5, dadurch gekennzeichnet, dass die Fläche der Durchflussöffnungen (8) der ersten Trennplatte (6) gegenüber der gesamten Fläche der Trennplatte (6) in der Durchflussrichtung am kleinsten ist, wobei die Fläche der Durchflussöffnungen von einer Platte nach der anderen in der Durchflussrichtung zunimmt.

7. Ventil nach Anspruch 1, dadurch gekennzeichnet, dass ein schmaler Spalt sich zwischen der Innenseite des Bereichs (7) zwischen den Sitzringen (5) im Ventilkörper (1) und den Enden der Trennplatte (6) befindet.

8. Ventil nach Anspruch 1, dadurch gekennzeichnet, dass weder Löcher noch Öffnungen auf der Aufströmungsseite des Durchflusses in der Grenzfläche der Trennplatte (6), die ausserhalb der Bohrung oder des Kanals (3) im Verschlusskörper (2) angeordnet ist, versehen sind.

9. Ventil nach irgendeinem der vorhergehenden Ansprüche, dadurch gekennzeichnet, dass jede Trennplatte (6) plan ist.

10. Ventil nach irgendeinem der Ansprüche 1 bis 8, dadurch gekennzeichnet, dass jede Trennplatte (6) in der Durchflussrichtung kreisbogenförmig ist.

11. Ventil nach irgendeinem der Ansprüche 1 bis 8, dadurch gekennzeichnet, das jede Trennplatte (34) wendelförmig gebogen ist.

12. Ventil nach irgendeinem der Ansprüche 1 bis 10, dadurch gekennzeichnet, dass jede Trennplatte (38, 38') aus einem Stangenoder Drahtenschirm in der Art eines Netzes besteht.

0013601

Fig.1.

Fig.2.

Fig.3.

0013601

Fig.4.

Fig.5.

Fig.6.

Fig.7.

2

0013601

Fig.8.

16

VIII    VIII

Fig.9.

35

Fig.10.

37

16

X    X

13

37

3

### Fig.11.

### Fig.12.

38,38'

XII    XII

### Fig.13.

38

### Fig.14.

38'

4